# EUROPÄISCHE PATENTSCHRIFT

(11) **EP 0 341 622 B1**
(45) Veröffentlichungstag und Bekanntmachung des Hinweises auf die Patenterteilung: **29.12.1993**
(21) Anmeldenummer: 89108220.8
(22) Anmeldetag: 06.05.1989
(51) Int. Cl.: G02C 5/22

(54) **Brille mit neigungsverstellbaren Bügeln**
Spectacle with adjustable-inclination temples
Lunettes avec tempes à inclinaison réglable

(30) Priorität: 13.05.1988 DE 8806308 U
(43) Veröffentlichungstag der Anmeldung: 15.11.1989
(73) Patentinhaber: UVEX WINTER OPTIK GmbH, D-90766 Fürth (DE)
(72) Erfinder: Grau, Werner, D-8890 Aichach-Untermauerbach (DE)
(74) Vertreter: Schneck, Herbert, Dipl.-Phys., Dr.

(56) Entgegenhaltungen:
- DE-A- 1 925 231
- DE-A- 3 632 629
- DE-U- 8 714 800
- DE-U- 8 806 308
- US-A- 3 947 100

## Beschreibung

Die Erfindung richtet sich auf eine Brille mit neigungsverstellbaren Bügeln gemäß dem Oberbegriff von Anspruch 1.

Eine derartige gattungsgemäße Brille ist aus der US-A-3 947 100 bekannt. Bei dieser vorbekannten Brille handelt es sich um eine optische Brille, die so ausgestaltet ist, daß unter optischen Gesichtspunkten eine optimale Einstellung der Brillenbügel ermöglicht wird.

Demgegenüber liegt der Erfindung die Aufgabe zugrunde, eine Brille der gattungsgemäßen Art so auszugestalten, daß sie als Schutzbrille verwendbar ist, wobei die Schutzwirkung durch die Möglichkeit der Einstellung eines optimalen Inklinationswinkels nicht beeinträchtigt werden soll, und wobei durch die Einstellung des individuellen Inklinationswinkels eine dichte und damit sichere Anlage der Schutzbrille am Gesicht des Trägers gewährleistet sein soll.

Diese Aufgabe wird gelöst gemaß dem kennzeichnenden Teil von Anspruch 1. Durch die danach vorgesehene Überlappung kann einerseits eine rastbare Inklinationseinstellung realisiert werden und gleichzeitig sichergestellt werden, daß auch bei großen Inklinationswinkeln von der Seite her weder Strahlung noch Partikel in die Augen des Benutzers eindringen können.

Günstigerweise durchsetzt der Schwenklagerbolzen auch den zweiten Ansatz, so daß eine zuverlässige Lagerung erreicht wird.

Weitere Merkmale, Vorteile und Einzelheiten der Erfindung ergeben sich aus der folgenden Beschreibung einer bevorzugten Ausführungsform anhand der Zeichnung. Dabei zeigen
- Fig. 1: eine Seitenansicht einer erfindungsgemäßen Brille,
- Fig. 2: eine Ansicht eines Halteteils und eines Bügels aus einer um 180° gegen die Ansicht in Fig. 1 gedrehten Blickrichtung und
- Fig. 3: eine Ansicht von Halteteil und Bügel.

Eine erfindungsgemäße Brille 1 umfaßt in an sich bekannter Weise einen Rahmen 2 und Scheiben 3. An den beiden äußeren Enden 4 des Rahmens 2 sind im einzelnen nicht dargestellte Bügelscharniere ausgebildet, in welche Halteteile 5 mit einer Ausnehmung 6 eingreifen und mittels in der Zeichnung ebenfalls nicht dargestellter Scharnierstifte schwenkbar gelagert sind.

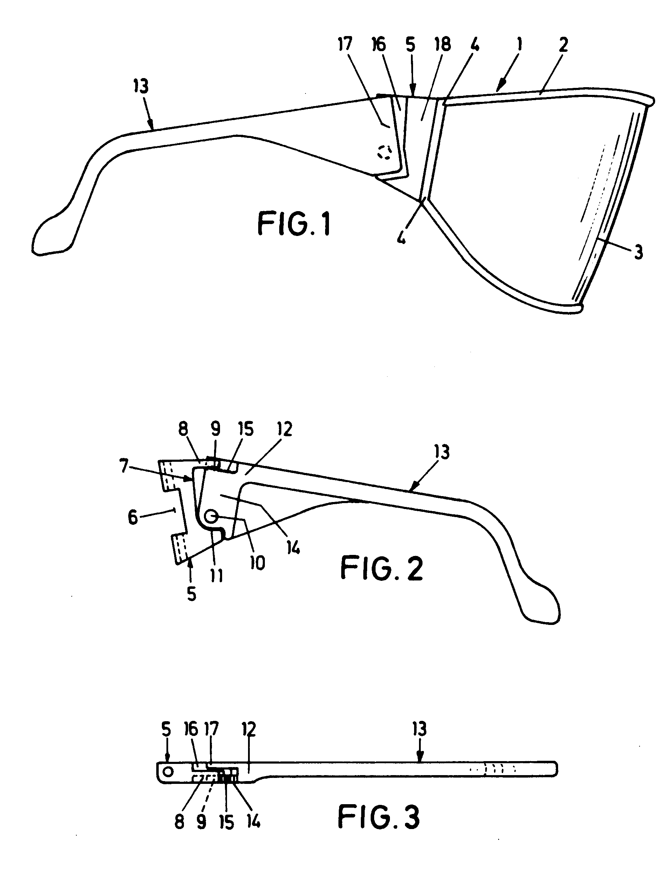

Die Halteteile 5 weisen einen plattenförmigen Grundkörper auf, der an seiner in Fig. 2 sichtbaren Innenseite eine Ausnehmung 7 aufweist, die zur Innenseite und nach hinten hin offen ist.

An der Oberkante 8 der Ausnehmung 7 ist an einem Vorsprung 9 eine Mehrzahl von Rastrippen vorgesehen, welche konzentrisch und parallel verlaufend zu einem Schwenklagerbolzen 10 angeordnet sind, welcher sich im Bereich der Unterkante 11 der Ausnehmung 7 befindet und eine innerhalb der Ausnehmung 7 vorgesehene Bohrung des Halteteils 5 durchsetzt`

Am vorderen Ende 12 der Bügel 13 ist ein plattenartiger Ansatz 14 angeformt, welcher in die Ausnehmung 7 eingreift, und an welchem der Schwenklagerbolzen 10 befestigt ist. An der Oberkante des Ansatzes 14 sind ebenfalls parallel und konzentrisch zu dem Schwenklagerbolzen 10 verlaufende Rastrippen 15 angeordnet, welche mit den Rastrippen 9 an dem Halteteil 5 in Eingriff stehen, so daß bei einem Verschwenken des Bügels 13 um den Schwenklagerbolzen 10 relativ zu dem Halteteil 5 die Rastrippen 15 mit den Rastrippen 9 kämmen und eine eingestellte Inklinationsposition festgehalten wird.

An der Außenseite des Halteteils 5 ist eine Ausnehmung 16 ausgebildet, welche nach oben und hinten flächig verlaufend offen ist. In diese Ausnehmung 16 greift ein zweiter Ansatz 17 des Bügels 13 ein, welcher bei der Ansicht in Fig. 1 sichtbar ist und parallel zu dem in Fig. 2 sichtbaren plattenartigen Ansatz 14 verläuft, so daß der durch die Ausnehmungen 7 und 16 in seiner Dicke verjüngte Abschnitt des Halteteils 5 zwischen den Ansätzen 14 und 17 zu liegen kommt.

Die gesamte Dicke dieses Bereiches zuzüglich der Ansätze 14 und 17 entspricht der Dicke des Grundkörpers 18 und des Halteteils 5, so daß der Bügel 13 mit seinen Ansätzen 14 und 17 glatt und ohne Abstufung in den Grundkörper 18 des Halteteils 5 übergeht.

Wie insbesondere aus Fig. 1 deutlich wird, kann durch die erfindungsgemäße Konstruktion bei hoher Funktionssicherheit eine sehr elegante, modische Gestaltung erreicht werden.

## Patentansprüche

1. Brille mit neigungsverstellbaren Bügeln bestehend aus
- einem Rahmen
- zwei Halteteilen (5), die jeweils mit Hilfe eines Scharniers mit dem Rahmen (2,4) verbunden sind,
- zwei Bügeln (13), die jeweils in einem Schwenklager mit einem Schwenklagerbolzen (10) inklinierbar an jeweils einem Halteteil (5) angelenkt sind,
- den jeweiligen Schwenklagern zugeordneten Rastvorrichtungen mit je zwei Gruppen von auf zwei konzentrischen Kreisbögen um das Schwenklager angeordneten Rastrippen (9,15), um den jeweiligen Bügel (13) in einer bestimmten Inklinationsposition zu halten,
**dadurch gekennzeichnet,**
daß das jeweilige Halteteil (5) einen Grundkörper (18) in Form einer in einer Ebene senkrecht zur Achse (10) des Schwenklagers angeordneten Platte aufweist,
daß in dem Halteteil (5) eine nach innen und hinten offene Ausnehmung (7) vorgesehen ist,
daß am jeweiligen vorderen Bügelende (12) ein plattenartig in eine Ebene normal zur Achse des Schwenklagers verbreiterter Ansatz (14) angeformt ist, daß an der Oberkante dieses Ansatzes (14) die erste Gruppe von Rastrippen (15) angeordnet ist, welche mit der korrespondierenden zweiten Gruppe von Rastrippen (9) in Eingriff stehen, welche einstückig mit dem Halteteil (5) an der oberen Innenkante (8) der Ausnehmung (7) des Halteteils (5) ausgebildet sind,
daß der Schwenklagerbolzen (10) den Ansatz (14) des Bügels (13) und das Halteteil (5) im Bereich der Unterkante (11) von dessen Ausnehmung (7) durchsetzt,
und daß das Halteteil (5) an der Außenseite eine weitere Ausnehmung (16) aufweist, welche nach außen und hinten offen ist, und am vorderen Bügelende (12) ein zweiter, parallel zum ersten verlaufender plattenartiger Ansatz (17) angeordnet ist welcher in die äußere Ausnehmung (16) des Halteteils (5) eingreift.

2. Brille nach Anspruch 1, **dadurch gekennzeichnet,** daß der Schwenklagerbolzen (10) den zweiten Ansatz (17) durchsetzt.

## Claims

1. A pair of glasses with inclination-adjustable temples, comprising
- a frame
- two holders (5), which are each connected with the frame (2, 4) by means of a hinge
- two temples (13), each of which is inclinably articulated on one holder (5) at a time in a swivel bearing with a swivel bearing bolt (10)
- locking means, associated with the respective swivel bearings, with in each case two groups of locking ribs (9, 15) arranged on two concentric arcs of a circle around the swivel bearing to maintain the respective temple (13) in a certain position of inclination,
characterized in that
the respective holder (5) has a basic body (18) in the form of a plate arranged in a plane perpendicular to the axis (10) of the swivel bearing,
in that a recess (7) open to the inside and backwards is provided in the holder (5),
in that an appendage (14) expanded in a plate-like manner on a plane normal to the axis of the swivel bearing is integrally formed on the respective front end of the temple (12),
in that the first group of locking ribs (15) is arranged on the upper edge of this appendage (14), which locking ribs (15) are in engagement with the corresponding second group of locking ribs (9) formed integrally with the holder (5) on the upper inner edge (8) of the recess (7) of the holder (5),
in that the swivel bearing bolt (10) passes through the appendage (14) of the temple (13) and the holder (5) in the vicinity of the lower edge (11) of the latter's recess (7), and
in that the holder (5) has, on the outside, another recess (16), which is open to the outside and backwards, and that a second plate-like appendage (17) extending parallel to the first and engaging with the outer recess (16) of the holder (5) is arranged on the front end (12) of the temple.

2. A pair of glasses according to claim 1, characterized in that the swivel bearing bolt (10) passes through the second appendage (17).

## Revendications

1. Lunettes à branches d'inclinaison réglable, comprenant
- une monture,
- deux pièces de support (5) qui sont reliées chacune à l'aide d'une charnière à la monture (2, 4),
- deux branches (13) qui sont articulées chacune de manière inclinable sur une pièce de support (5), chacune dans un palier de pivotement au moyen d'un axe de palier de pivotement (10),
- des dispositifs d'encliquetage associés à chacun des paliers de pivotement et comportant chacun deux groupes de nervures d'encliquetage (9, 15) agencées sur deux arcs de cercle concentriques autour du palier de pivotement, en vue de maintenir chaque branche (13) dans une position d'inclinaison déterminée, caractérisées
- en ce que chaque pièce de support (5) comporte un corps de base (18) se présentant sous la forme d'une plaque disposée dans un plan perpendiculaire à l'axe (10) du palier de pivotement,
- en ce que dans la pièce de support (5) est prévu un évidement (7) ouvert vers l'intérieur et vers l'arrière,
- en ce que sur chaque extrémité de branche avant (12) est formée une embase élargie (14) en forme de plaque dans un plan normal à l'axe du palier de pivotement,
- en ce que sur le bord supérieur de cette embase (14) est disposé le premier groupe de nervures d'encliquetage (15), qui sont en prise avec le second groupe de nervures d'encliquetage (9) qui sont formées d'un seul tenant avec la pièce de support (5), sur le bord intérieur (8) de l'évidement (7) de la pièce de support (5),
- en ce que l'axe de palier de pivotement (10) traverse l'embase (14) de la branche (13) et la pièce de support (5), dans la zone du bord inférieur (11) de son évidement (7),
- et en ce que la pièce de support (5) présente sur le côté extérieur, un autre évidement (16) qui est ouvert vers l'extérieur et vers l'arrière, et à l'extrémité de branche avant (12) est disposée une seconde embase (17) en forme de plaque s'étendant parallèlement à la première, et s'engageant dans l'évidement extérieur (16) de la pièce de support (5).

2. Lunettes selon la revendication 1, caractérisées en ce que l'axe de palier de pivotement (10) traverse la seconde embase (17).
